# EUROPÄISCHE PATENTSCHRIFT

(11) **EP 3 656 033 B1**
(45) Veröffentlichungstag und Bekanntmachung des Hinweises auf die Patenterteilung: **27.07.2022**
(21) Anmeldenummer: 17777170.6
(22) Anmeldetag: 30.08.2017
(51) Int. Cl.: H02J 3/36, H02J 3/38, H02M 7/483, H02M 1/00

(54) **STROMRICHTER-ANORDNUNG ZUR ANBINDUNG VON WINDENERGIEANLAGEN AN EIN ENERGIEVERSORGUNGSNETZ**
CONVERTER ARRANGEMENT FOR CONNECTING WIND ENERGY INSTALLATIONS TO AN ENERGY SUPPLY SYSTEM
ENSEMBLE DE CONVERTISSEURS D'ÉNERGIE POUR RACCORDER DES ÉOLIENNES À UN RÉSEAU D'ALIMENTATION ÉLECTRIQUE

(43) Veröffentlichungstag der Anmeldung: 27.05.2020
(73) Patentinhaber: Siemens Energy Global GmbH & Co. KG, 81739 München (DE)
(72) Erfinder: CHRIST, Timo, 91322 Gräfenberg (DE); MENKE, Peter, 96237 Oberfüllbach (DE)
(86) Internationale Anmeldenummer: PCT/EP2017/071780
(87) Internationale Veröffentlichungsnummer: WO 2019/042539

(56) Entgegenhaltungen:
- EP-A1- 3 125 392
- WO-A1-2017/050345
- US-A1- 2016 013 653
- US-A1- 2017 009 743

## Beschreibung

Die Erfindung betrifft eine Stromrichter-Anordnung zur Anbindung von Windenergieanlagen an ein Energieversorgungsnetz gemäß dem Oberbegriff des Anspruchs 1.

Stromrichter-Anordnungen, die beispielsweise im Meer aufgestellte Windenergieanlagen in Form von Windrädern über eine landseitige Gleichstrom-Übertragungsstation an ein Energieversorgungsnetz anbinden, sind bekannt. Im Meer befindet sich dabei eine HGÜ-Plattform, wobei HGÜ für Hochspannungs-Gleichstrom-Übertragung steht. Auf der Plattform befinden sich neben der Stromrichter-Anordnung Transformatoren und Drosseln, wobei die Transformatoren der Stromrichter-Anordnung vorgeschaltet und die Drosseln nachgeschaltet sind. Die Windenergieanlagen generieren jeweils eine dreiphasige elektrische Leistung bei einer Wechselspannung von beispielsweise 33 kV. Mehrere Windenergieanlagen sind meist miteinander verbunden, und zwar über auf einer Sammelplattform befindlichen Transformatoren, die die Spannungsebene auf z.B. 155 kV anheben. Über ein 155kV-Kabel sind mehrere Sammelplattformen über einen gemeinsamen Anschlussstrang mit der HGÜ-Plattform verbunden. Die HGÜ-Plattform ist wiederum mittels eines Hochspannungskabels an die landseitige Gleichstrom-Übertragungsstation angeschlossen und so mit dem Energieversorgungsnetz verbunden. Die Übertragung der elektrischen Energie von der Plattform zum landseitigen Versorgungsnetz erfolgt als Gleichpannungsübertragung im Hochspannungsbereich.

Aus der Patentanmeldung US 2016/0013653 A1 ist eine Stromrichterstation mit einem Diodengleichrichter bekannt. Dabei sind der Diodengleichrichter auf einer tragenden Struktur und zwei Transformatoren auf jeweils einer eigenen tragenden Struktur angeordnet.

Die Patentanmeldung EP 3 125 392 A1 offenbart einen DC-DC Autotransformer, der eine Vielzahl von Gleichspannungsanschlüssen aufweist. Der DC-DC Autotransformer kann zum Verbinden einer Vielzahl von Gleichspannungssystemen mit unterschiedlichen Spannungen genutzt werden.

Aus der internationalen Patentanmeldung WO 2017/050345 A1 ist eine Hochspannungs-Gleichstrom-Übertragungseinrichtung bekannt, die zwei Multilevelstromrichter aufweist. Mit dieser Hochspannungs-Gleichstrom-Übertragungseinrichtung ist ein Windpark an ein Wechselspannungsnetz angeschlossen.

Die Patentanmeldung US 2017/0009743 A1 offenbart ebenfalls eine Hochspannungs-Gleichstrom-Übertragungseinrichtung zum Anschluss eines Windparks an ein Wechselspannungsnetz.

Die Aufgabe der Erfindung besteht darin, zu vermeiden, dass viele Komponenten mehrfach installiert werden müssen, um so eine kosteneffiziente Stromrichter-Anordnung zu erzielen.

Die Lösung sieht vor, dass Transformatoren und mindestens zwei Stromrichter vorhanden sind, wobei die Transformatoren Primärwicklungen und Sekundärwicklungen aufweisen und wobei an die Primärwicklungen der zumindest eine Anschlussstrang angeschlossen ist. Die beiden Stromrichter sind gleichpolig in Reihe geschaltet und weisen pro Phase ein Phasenmodul mit je zwei Stromrichter-Einheiten auf. Die Stromrichter-Einheiten sind gleichpolig in Reihe geschaltet und deren Verbindungspunkte bilden je einen Phasenanschluss, der mit einer der Sekundärwicklungen verbunden ist. Die Phasenmodule eines Stromrichters bilden ausgangsseitig jeweils eine gemeinsame Stromrichter-Gleichspannung und die Stromrichter-Gleichspannungen (aufgrund der gleichpoligen ausgangsseitigen Reihenschaltung der Stromrichter) zusammen die Ausgangs-Gleichspannung der Stromrichter-Anordnung.

Mit Vorteil befinden sich je zwei unmittelbar hintereinander in Reihe geschaltete Stromrichter jeweils in einem (vorteilhafterweise hermetisch) gekapselten Gehäuse (Kapselungsgehäuse), das zur elektrischen Isolation und Kühlung der beiden Stromrichter mit einem elektrisch isolierenden Medium gefüllt ist.

Zweckmäßigerweise ist die eine Hälfte der an die unmittelbar hintereinander in Reihe geschalteten Stromrichter angeschlossenen Sekundärwicklungen in Sternschaltung und die andere Hälfte der Sekundärwicklungen in Dreieckschaltung geschaltet. Um eine höhere Pulsigkeit zu erreichen, können die Primärwicklungen auch in Z-Schaltung ausgeführt sein.

Eine vorteilhafte Ausgestaltung sieht vor, dass die Stromrichter-Einheiten als Gleichrichterbrücken ausgebildet sind.

Mit Vorteil sind die Gleichrichter der Gleichrichterbrücken in Form einer B6-Brücke geschaltet.

Alle Gleichrichter weisen mindestens eine Diode oder mehrere gleichpolig in Reihe geschaltete Dioden auf.

Eine alternative Ausgestaltung sieht vor, dass die Stromrichter-Einheiten als selbstgeführte Stromrichter mit mehreren in Reihe geschalteten Sub-Modulen ausgebildet sind.

Mit Vorteil sind die Sub-Module als Voll- oder Halbrücke ausgebildet.

Zweckmäßigerweise weisen die Sub-Module als Halbleiterschalter IGBT (Insulated Gate Bipolar Transistor) auf.

Mit Vorteil weist die Reihenschaltung der Stromrichter (zur Bildung eines Bipols bzw. einer bipolaren Ausgangs-Gleichspannung) eine elektrische Erdung auf, d.h. an einem der Verbindungspunkte (an einem entsprechenden Verbindungspunkt) ist die Reihenschaltung der Stromrichter geerdet.

Mit Vorteil entfallen die Sammelplattformen und der Anschluss der Windenergieanlagen erfolgt direkt an die (HGÜ-)Plattform.

Die Erfindung wird nachfolgend anhand eines Ausführungsbeispiels näher beschrieben. Es zeigen:
- Fig. 1: eine Plattform sowie mehrere Windenergieanlagen in Form von Windrädern in einem Gewässer,
- Fig. 2: die wechselspannungsseitig mit Transformatoren und gleichspannungsseitig mit Drosseln verbundene Stromrichter-Anordnung,
- Fig. 3: eine als Gleichrichterbrücke ausgebildete Stromrichter-Einheit,
- Fig. 4: die gesamte Stromrichter-Anordnung mit als Gleichrichterbrücken geschalteten Gleichrichtern,
- Fig. 5: eine als mehrphasiger modularer Mehrstufenumrichter mit mehreren in Reihe geschaltete Sub-Modulen ausgebildete Stromrichter-Einheit,
- Fig. 6: als Vollbrücke ausgebildete Sub-Module und
- Fig. 7: als Halbbrücke ausgebildete Sub-Module.

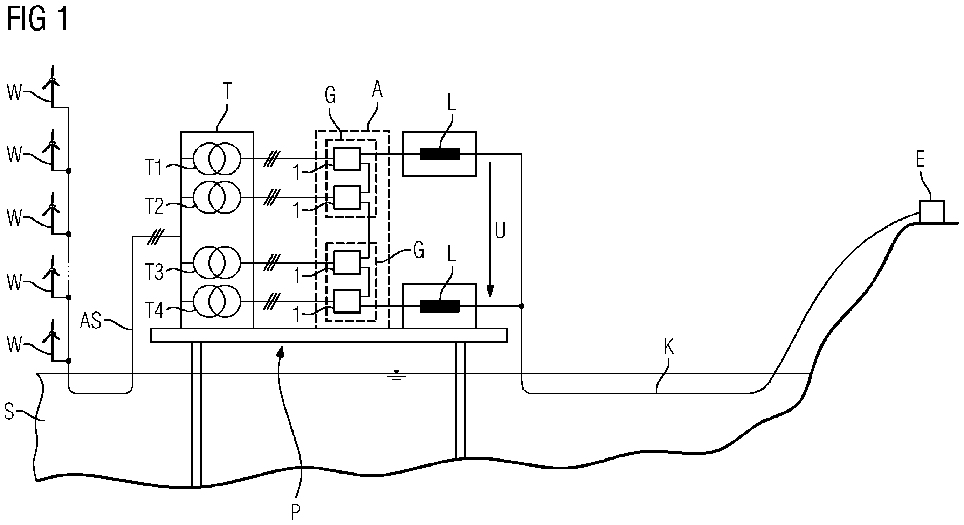

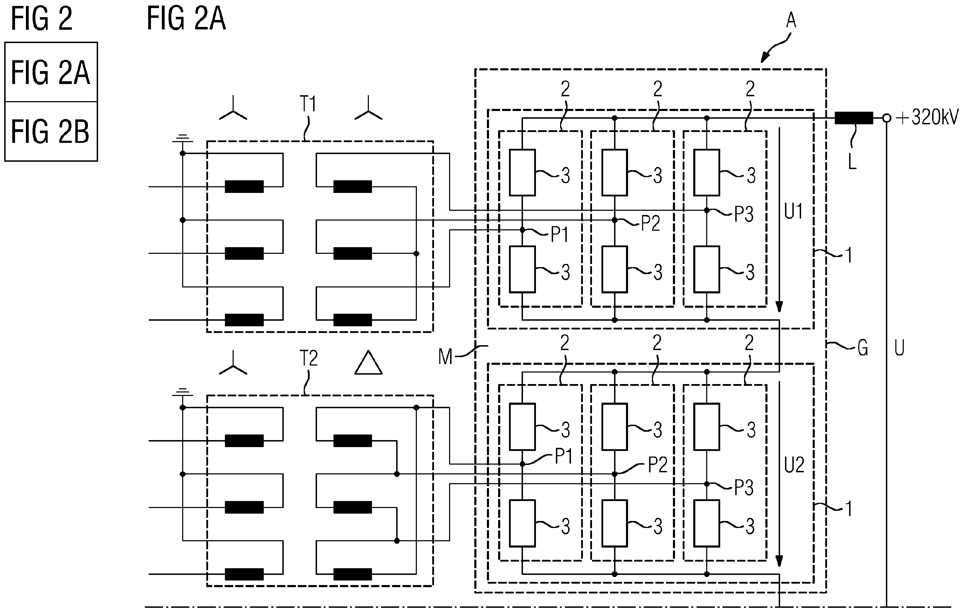

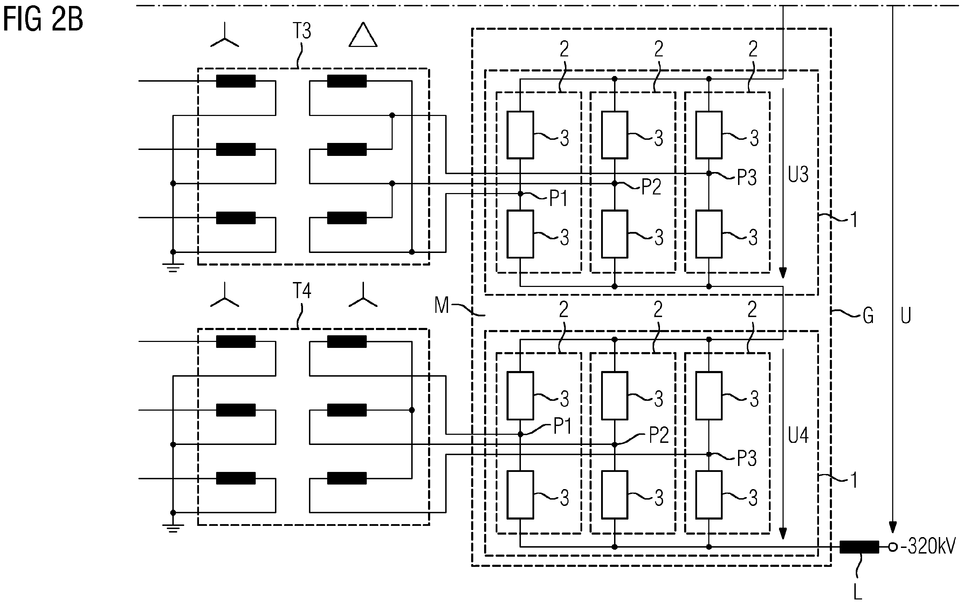

Fig. 1 zeigt eine Plattform P (HGÜ-Plattform) sowie mehrere Windenergieanlagen W (Wind Turbine Generators) in Form von Windrädern, die in einem Gewässer S (hier im Meer) angeordnet sind. Auf der Plattform P oberhalb der Oberfläche des Gewässers S befinden sich Transformatoren T (s. Fig. 2: T1, T2, T3, T4), eine Stromrichter-Anordnung A und zwei Drosseln L, die in dieser Reihenfolge miteinander verbunden (quasi in Reihe geschaltet) sind. Die Windenergieanlagen W generieren jeweils einen dreiphasigen Wechselstrom (eine dreiphasige elektrische Leistung) bei einer Wechselspannung von mindestens 66kV. Wie Fig. 1 zeigt, sind mehrere Windenergieanlagen W direkt miteinander verbunden und über einen gemeinsamen Anschlussstrang AS an den Transformatoren T angeschlossen.

Die Anbindung an ein landseitiges Energieversorgungsnetz erfolgt über einen elektrischen Leiter K in Form eines Hochspannungskabels, das plattformseitig an die beiden auf der Plattform P befindlichen Drosseln L angeschlossen ist. Der Leiter K ist außerhalb des Gewässers S an Land (Onshore) mit einer elektrischen Einrichtung E verbunden, bei welcher es sich beispielsweise um eine Gleichstrom-Übertragungsstation oder um einen Stromrichter handeln kann. Die Übertragung der elektrischen Energie erfolgt von der Plattform P zum landseitigen Versorgungsnetz als Gleichpannungsübertragung im Hochspannungsbereich.

Fig. 2 zeigt die wechselspannungsseitig mit den Transformatoren T1, T2, T3, T4 und gleichspannungsseitig mit den Drosseln L verbundene Stromrichter-Anordnung A. Die Transformatoren T1, T2, T3, T4 weisen (in Fig. 2 auf der linken Seite) Primärwicklungen und Sekundärwicklungen (in Fig. 2 auf der rechten Seite) auf, wobei der Anschlussstrang AS an die in Sternschaltung geschalteten Primärwicklungen angeschlossen ist.

Die Stromrichter-Anordnung A verfügt hier über vier Stromrichter 1, die gleichpolig in Reihe geschaltet sind und pro Phase ein Phasenmodul 2 mit je zwei Stromrichter-Einheiten 3 aufweisen. Die beiden Stromrichter-Einheiten 3 sind gleichpolig in Reihe geschaltet und deren Verbindungspunkte bilden drei Phasenanschlüsse P1, P2, P3, die mit einer Sekundärwicklung verbunden sind.

Die Reihenschaltung der Stromrichter 1 kann zur Bildung eines Bipols (einer bipolaren Ausgangs-Gleichspannung der Stromrichter-Anordnung A) eine elektrische Erdung aufweisen, d.h. an einem der Verbindungspunkte P1, P2, P3 (also an einem entsprechenden Verbindungspunkt) geerdet sein.

Ausgangsseitig bilden die Phasenmodule 2 eines Stromrichters 1 jeweils eine gemeinsame Stromrichter-Gleichspannung U1, U2, U3, U4 aus.

Die Stromrichter-Gleichspannungen U1, U2, U3, U4 summieren sich aufgrund der gleichpoligen Reihenschaltung jeweils zur Ausgangs-Gleichspannung U der Stromrichter-Anordnung A auf.

Je zwei unmittelbar hintereinander in Reihe geschaltete Stromrichter 1 befinden sich in einem gekapselten Gehäuse G, einem Kapselungsgehäuse, das zur elektrischen Isolation und Kühlung der beiden Stromrichter 1 mit einem elektrisch isolierenden Medium M gefüllt ist, das eine Flüssigkeit, hier insbesondere ein Öl bzw. ein Ester ist.

Dabei ist eine der Sekundärwicklungen, die an einen der beiden in einem Kapselungsgehäuse befindlichen Stromrichter 1 angeschlossen ist, in Sternschaltung und die andere Sekundärwicklung, die an den anderen Stromrichter des Kapselungsgehäuses angeschlossen ist, in Dreiecksschaltung ausgeführt.

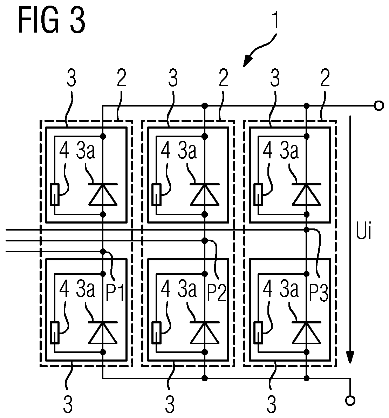

Fig. 3 zeigt einen netzgeführten Stromrichter 1 mit drei Phasenmodulen 2, der Stromrichter-Einheiten 3 mit Gleichrichtern (Ventilen) 3a aufweist. Die als Gleichrichterbrücken geschalteten Gleichrichter 3a weisen mindestens eine Diode (allgemein Ventile) oder mehrere gleichpolig in Reihe geschaltete Dioden auf, die hier in Form einer B6-Brückenschaltung geschaltet sind. Die einzelnen oder gleichpolig in Reihe geschalteten Dioden der Gleichrichter 3a sind zur Spannungsbegrenzung und damit zum Schutz vor einer Spannungsübererhöhung jeweils mit einem Modulableiter 4 überbrückt, der eine entsprechende Grenzspannung aufweist.

Die Stromrichter-Gleichspannung ist hier mit Ui bezeichnet; Ui steht für eine der Stromrichter-Gleichspannungen U1, U2, U3, U4.

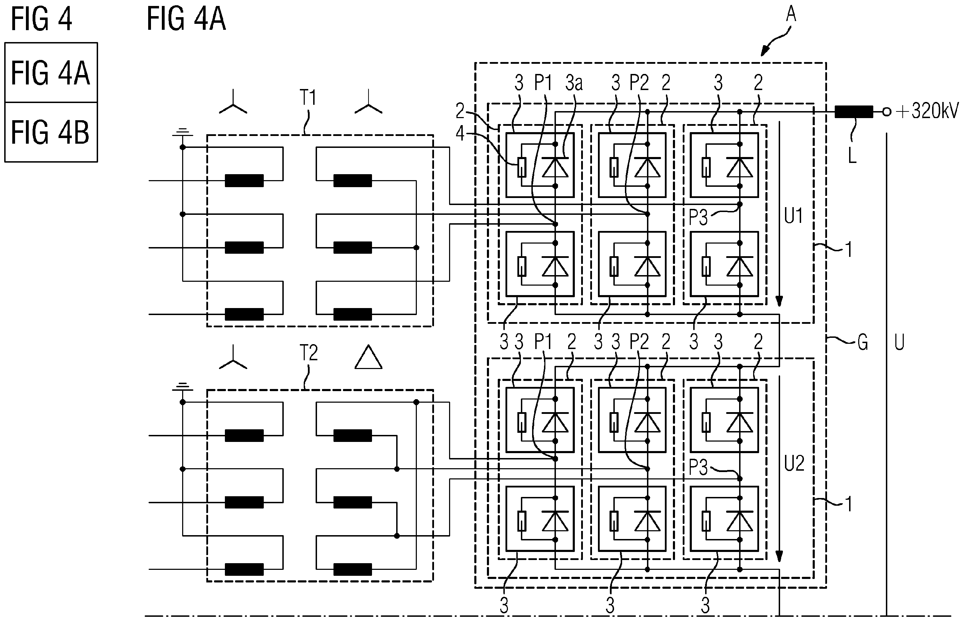

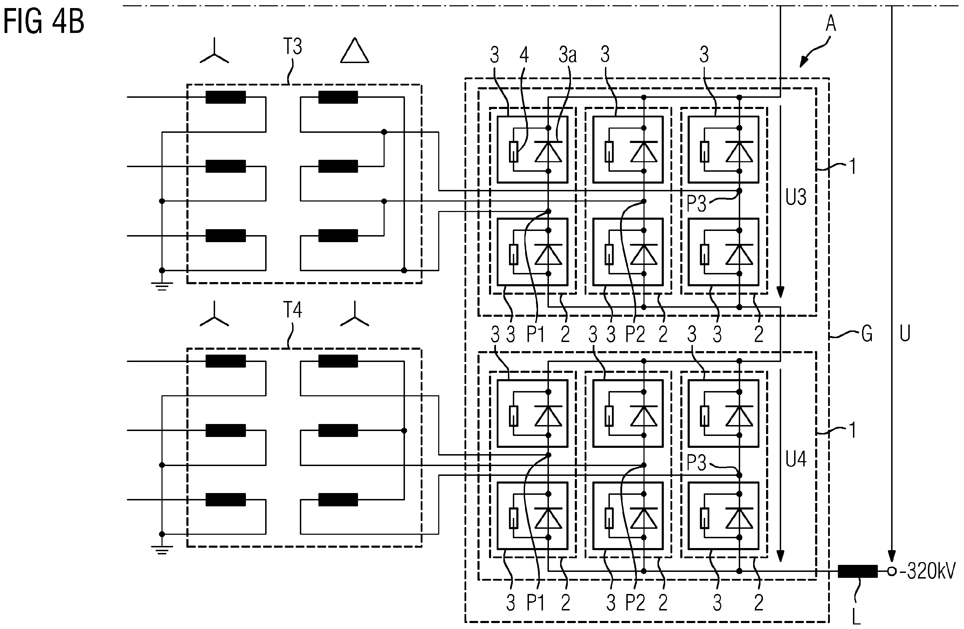

Fig. 4 zeigt die gesamte Stromrichter-Anordnung A mit den als Gleichrichterbrücken (B6-Brückenschaltung) geschalteten Gleichrichtern 3a der Stromrichter-Einheiten 3 gemäß Fig. 2-3.

Fig. 3 und 4 zeigen also einen gekapselten DiodenGleichrichter, bei dem die Dioden in Öl- bzw. Ester gekapselt sind und die Isolierung gegen Erdpotential erfolgt.

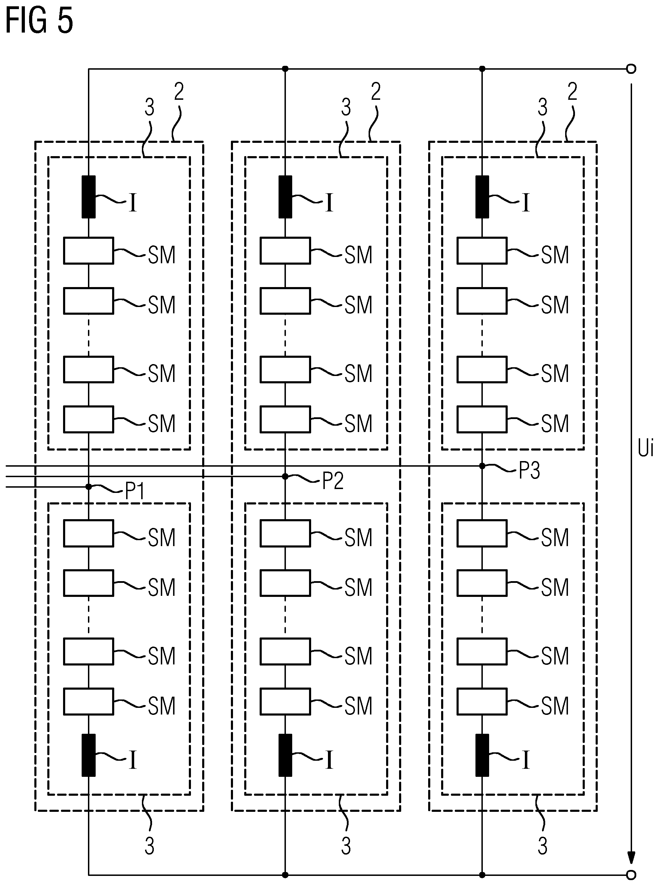

Fig. 5 zeigt eine alternative Stromrichter-Einheit 3 eines selbstgeführten Stromrichters 1, die hier als mehrphasiger modularer Mehrstufenumrichter ausgebildet ist, der mehrere in Reihe geschaltete Sub-Module SM und eine Induktivität I aufweist.

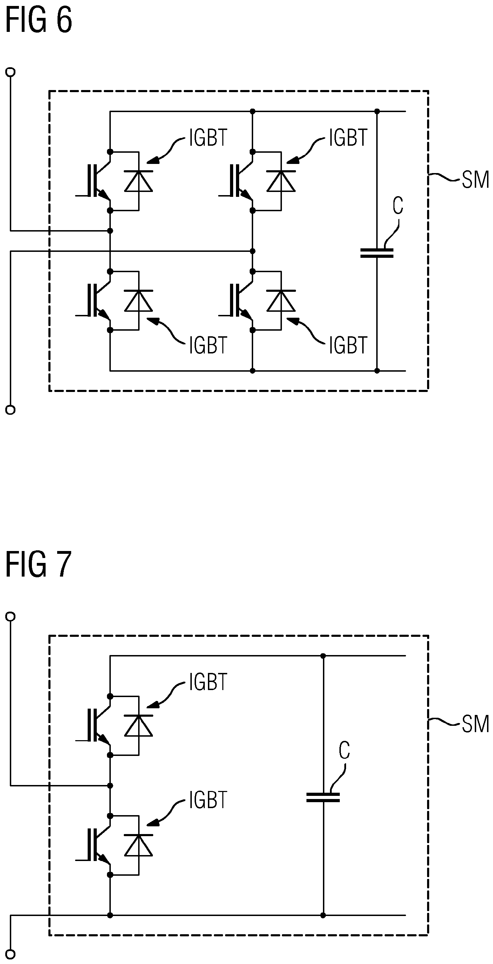

Fig. 6 zeigt die als Vollbrücke ausgebildeten Sub-Module SM. Man erkennt, dass die Sub-Module SM jeweils Halbleiterschalter (mit mindestens einem Halbleiter) und einen Kondensator C als Kapazität aufweisen.

Fig. 7 zeigt die als Halbbrücke ausgebildeten Sub-Module SM, die ebenfalls Halbleiterschalter IGBT (mit mindestens einem Halbleiter) und einen Kondensator C als Kapazität aufweisen.

Das Halbleiterbauelement des Halbleiterschalters ist hier in Fig. 6 und 7 ein IGBT (Insulated Gate Bipolar Transistor) oder ein Reverse-Conducting IGBT (RC-IGBT), kann jedoch auch ein IGCT (Integrated Gate-Commutated Thyristor), ein IEGT (Injection-Enhanced Gate Transistor) oder ein MOSFET (Metal-Oxide-Semiconductor Field-Effect Transistor) sein.

## Patentansprüche

1. Anordnung mit einer Stromrichter-Anordnung (A) zur Anbindung von Windenergieanlagen (W) an ein Energieversorgungsnetz, mit einer Plattform (P), mit den Windenergieanlagen und mit zumindest einem gemeinsamen Anschlussstrang (AS) zum Anschließen der Windenergieanlagen (W), wobei die Stromrichter-Anordnung (A) sich auf der in einem Gewässer (S) angeordneten Plattform (P) befindet, wobei die Windenergieanlagen (W) jeweils eine dreiphasige elektrische Spannung generieren und mehrere der Windenergieanlagen (W) über den Anschlussstrang (AS) miteinander verbunden sind und wobei die Übertragung der elektrischen Energie von der Stromrichter-Anordnung (A) zum Energieversorgungsnetz als Gleichspannungsübertragung im Hochspannungsbereich erfolgt, wobei
die Anordnung Transformatoren (T, T1, T2, T3, T4) aufweist, die Primärwicklungen und Sekundärwicklungen aufweisen, wobei an die Primärwicklungen der zumindest eine Anschlussstrang (AS) angeschlossen ist, und die Stromrichter-Anordnung mindestens zwei Stromrichter (1) aufweist, die gleichpolig in Reihe geschaltet sind und pro Phase ein Phasenmodul (2) mit je zwei Stromrichter-Einheiten (3) aufweisen, wobei die Stromrichter-Einheiten (3) gleichpolig in Reihe geschaltet sind und deren Verbindungspunkte je einen Phasenanschluss (P1, P2, P3) bilden, der mit einer der Sekundärwicklungen verbunden ist, wobei die Phasenmodule (2) eines Stromrichters (1) ausgangsseitig jeweils eine gemeinsame Stromrichter-Gleichspannung (U1, U2, U3, U4) und die Stromrichter-Gleichspannungen (U1, U2, U3, U4) zusammen die Ausgangs-Gleichspannung (U) der Stromrichter-Anordnung (A) bilden,
**dadurch gekennzeichnet,**
**dass** sich die Transformatoren (T, T1, T2, T3, T4) auf der Plattform (P) befinden und die mehreren Windenergieanlagen über den Anschlussstrang (AS) an den Transformatoren (T, T1, T2, T3, T4) angeschlossen sind, so dass die Anordnung frei von Sammelplattformen mit Transformatoren, über die mehrere Windenergieanlagen miteinander verbunden sind, ist und ein Anschluss der Windenergieanlagen direkt an die Plattform erfolgt.

2. Anordnung nach Anspruch 1,
**dadurch gekennzeichnet,**
**dass** sich je zwei unmittelbar hintereinander in Reihe geschaltete Stromrichter (1) jeweils in einem gekapselten Gehäuse (G) befinden, das mit einem elektrisch isolierenden Medium (M) gefüllt ist.

3. Anordnung nach Anspruch 2,
**dadurch gekennzeichnet,**
**dass** eine der an die beiden unmittelbar hintereinander in Reihe geschalteten Stromrichter (1) angeschlossenen Sekundärwicklungen in Sternschaltung und die andere Sekundärwicklung in Dreieckschaltung geschaltet ist.

4. Anordnung nach einem der Ansprüche 1 - 3,
**dadurch gekennzeichnet,**
**dass** die Stromrichter-Einheiten (3) eines netzgeführten Stromrichters (1) als Gleichrichterbrücken oder Thyristorbrücken ausgebildet sind.

5. Anordnung nach Anspruch 4,
**dadurch gekennzeichnet,**
**dass** die Gleichrichter (3a) der Gleichrichterbrücken in Form einer B6-Brücke geschaltet sind.

6. Anordnung nach Anspruch 4 oder 5,
**dadurch gekennzeichnet,**
**dass** die Gleichrichter (3a) mindestens eine Diode oder mehrere gleichpolig in Reihe geschaltete Dioden aufweisen.

7. Anordnung nach einem der Ansprüche 1 - 3,
**dadurch gekennzeichnet,**
**dass** die Stromrichter-Einheiten (3) eines selbstgeführten Stromrichters (1) mit mehreren Sub-Modulen (SM) ausgebildet sind.

8. Anordnung nach Anspruch 7,
**dadurch gekennzeichnet,**
**dass** die Sub-Module (SM) als Voll- oder Halbbrücke ausgebildet sind.

9. Anordnung nach Anspruch 7 oder 8,
**dadurch gekennzeichnet,**
**dass** die Sub-Module (SM) als Halbleiterschalter IGBT aufweisen.

10. Anordnung nach einem der Ansprüche 1 - 9,
**dadurch gekennzeichnet,**
**dass** die Reihenschaltung der Stromrichter (1) eine elektrische Erdung aufweist.

## Claims

1. Arrangement with a power converter arrangement (A) for connecting wind energy installations (W) to an energy supply network, with a platform (P), with the wind energy installations and with at least one common connection line (AS) for connecting the wind energy installations (W), wherein the power converter arrangement (A) is located on the platform (P) situated in a body of water (S), wherein the wind energy installations (W) each generate a three-phase electric voltage and a plurality of the wind energy installations (W) are connected to one another via the connection line (AS) and wherein the electrical energy is transmitted from the power converter arrangement (A) to the energy supply network as a high-voltage DC transmission, wherein the arrangement has transformers (T, T1, T2, T3, T4), which have primary windings and secondary windings, wherein the at least one connection line (AS) is connected to the primary windings, and the power converter arrangement has at least two power converters (1), which are connected in series with the same polarity and have per phase one phase module (2) with in each case two power converter units (3), wherein the power converter units (3) are connected in series with the same polarity and the connection points of which each form a phase connection (P1, P2, P3), which is connected to one of the secondary windings, wherein the phase modules (2) of a power converter (1) each form a common power converter DC voltage (U1, U2, U3, U4) on the output side and the power converter DC voltages (U1, U2, U3, U4) together form the output DC voltage (U) of the power converter arrangement (A),
**characterized in that** the transformers (T, T1, T2, T3, T4) are located on the platform (P) and the plurality of wind energy installations are connected to the transformers (T, T1, T2, T3, T4) via the connection line (AS) such that the arrangement is free from collecting platforms with transformers via which a plurality of wind energy installations are connected to one another and the wind energy installations are connected directly to the platform.

2. Arrangement according to Claim 1,
**characterized in that** two power converters (1) that are connected one directly after the other in series are respectively located in an encapsulated housing (G) which is filled with an electrically insulating medium (M).

3. Arrangement according to Claim 2,
**characterized in that** one of the secondary windings connected to the two power converters (1) that are connected one directly after the other in series is connected in a star connection and the other secondary winding is connected in a delta connection.

4. Arrangement according to one of Claims 1-3,
**characterized in that** the power converter units (3) of a line-commutated power converter (1) are configured as rectifier bridges or thyristor bridges.

5. Arrangement according to Claim 4,
**characterized in that** the rectifiers (3a) of the rectifier bridges are connected in the form of a B6 bridge.

6. Arrangement according to Claim 4 or 5,
**characterized in that** the rectifiers (3a) have at least one diode or a plurality of diodes connected in series with the same polarity.

7. Arrangement according to one of Claims 1-3,
**characterized in that** the power converter units (3) of a self-commutated power converter (1) are configured with a plurality of submodules (SM).

8. Arrangement according to Claim 7,
**characterized in that** the submodules (SM) are configured as a full bridge or a half bridge.

9. Arrangement according to Claim 7 or 8,
**characterized in that** the submodules (SM) have IGBTs as semiconductor switches.

10. Arrangement according to one of Claims 1-9,
**characterized in that** the series circuit of the power converters (1) has electrical grounding.

## Revendications

1. Montage ayant un montage (A) de convertisseur pour le rattachement d'éoliennes (W) à un réseau d'alimentation en énergie, comprenant une plateforme (P), ayant les éoliennes et ayant au moins un câble (AS) de raccordement commun pour le raccordement des éoliennes (W), dans lequel le montage (A) de convertisseur se trouve sur la plateforme (P) disposée sur des eaux (S), dans lequel les éoliennes (W) produisent chacune une tension électrique triphasée et plusieurs des éoliennes (W) sont connectées les unes au autres par le câble (AS) de raccordement et dans lequel le transport de l'énergie électrique du montage (A) de convertisseur au réseau d'alimentation en énergie a lieu sous la forme d'un transport de tension continue dans le domaine de la haute tension, dans lequel le montage a des transformateurs (T, T1, T2, T3, T4), qui ont des enroulements primaires et des enroulements secondaires, dans lequel le au moins un câble (AS) de raccordement est connecté aux enroulements primaires et le montage de convertisseur a au moins deux convertisseurs (1), qui sont montés en série homopolairement et qui ont par phase un module (2) de phase ayant respectivement deux unités (3) de convertisseur, dans lequel les unités (3) de convertisseurs sont montées en série homopolairement et leurs points de liaison forment respectivement une connexion (P1, P2, P3) de phase, qui est reliée à l'un des enroulements secondaires, dans lequel les modules (2) de phase d'un convertisseur (1) forment du côté de la sortie respectivement une tension (U1, U2, U3, U4) continue de convertisseur commune et les tensions (U1, U2, U3, U4) continues de convertisseur forment ensemble la tension (U) continue de sortie du montage (A) de convertisseur,
**caractérisé**
**en ce que** les transformateurs (T, T1, T2, T3, T4) se trouvent sur la plateforme (P) et les plusieurs éoliennes sont raccordées par le câble (AS) de raccordement aux transformateurs (T, T1, T2, T3, T4), de manière à ce que le montage soit exempt de plateforme collectrice ayant des transformateurs, par lesquels plusieurs éoliennes sont reliées ensemble, et de manière à ce qu'un raccordement des éoliennes ait lieu directement sur la plateforme.

2. Montage suivant la revendication 1,
**caractérisé**
**en ce que** respectivement deux convertisseurs (1) montés en série directement l'un derrière l'autre se trouvent chacune dans une enveloppe (G) blindée emplie d'un milieu (M) isolant du point de vue électrique.

3. Montage suivant la revendication 2,
**caractérisé**
**en ce que** l'un des enroulements secondaires, connecté aux deux convertisseurs (1) montés en série directement l'un derrière l'autre, est monté en circuit en étoile et les autres enroulements secondaires sont montés en circuit en triangle.

4. Montage suivant l'une des revendications 1 à 3,
**caractérisé**
**en ce que** les unités (3) de convertisseur d'un convertisseur (1) commuté par le réseau sont constituées sous la forme de ponts de convertisseur ou de ponts de thyristor.

5. Montage suivant la revendication 4,
**caractérisé en ce que** les convertisseurs (3a) des ponts de convertisseur sont montés sous la forme d'un pont B6.

6. Montage suivant la revendication 4 ou 5,
**caractérisé**
**en ce que** les convertisseurs (3a) ont au moins une diode ou plusieurs diodes montées en série homopolairement.

7. Montage suivant l'une des revendications 1 à 3,
**caractérisé**
**en ce que** les unités (3) de convertisseur d'un convertisseur (1) à commutation autonome sont constituées de plusieurs sous modules (SM) .

8. Montage suivant la revendication 7,
**caractérisé**
**en ce que** les sous-modules (SM) sont constitués sous la forme de ponts complets ou de demi-ponts.

9. Montage suivant la revendication 7 ou 8,
**caractérisé**
**en ce que** les sous modules (SM) ont des interrupteurs IGBT à semiconducteur.

10. Montage suivant l'une des revendications 1 à 9,
**caractérisé**
**en ce que** le circuit série des convertisseurs (1) a une mise à la terre électrique.
